**Europäisches Patentamt**

**European Patent Office**

**Office européen des brevets**

(11) Veröffentlichungsnummer: **0 314 948 B1**

(12) **EUROPÄISCHE PATENTSCHRIFT**

(45) Veröffentlichungstag der Patentschrift: **23.12.92**

(21) Anmeldenummer: **88116934.6**

(22) Anmeldetag: **12.10.88**

(51) Int. Cl.5: **F16D 9/00**, F16D 27/01, B25J 19/06

(54) **Sicherheitskupplung für die Handhabungstechnik.**

(30) Priorität: **05.11.87 DE 3737621**

(43) Veröffentlichungstag der Anmeldung:
**10.05.89 Patentblatt 89/19**

(45) Bekanntmachung des Hinweises auf die Patenterteilung:
**23.12.92 Patentblatt 92/52**

(84) Benannte Vertragsstaaten:
**AT BE CH DE FR GB IT LI LU NL SE**

(56) Entgegenhaltungen:
DE-C- 834 481     DE-C- 892 405
GB-A- 2 068 891   GB-A- 2 071 608
US-A- 2 812 677   US-A- 3 650 362
US-A- 4 062 203

(73) Patentinhaber: **SIEMENS AKTIENGESELL-SCHAFT**
**Wittelsbacherplatz 2**
**W-8000 München 2(DE)**

(72) Erfinder: **Martin, Rolf, Dipl.-Ing.**
**Karlstrasse 1**
**W-8033 Planegg(DE)**
Erfinder: **Krammer, Michael, Dipl.-Ing.FH.**
**Jahnstrasse 3**
**W-8220 Traunstein(DE)**

## Beschreibung

Die Erfindung betrifft eine Sicherheitskupplung für die Handhabungstechnik, insbesondere für die Verbindung zwischen einem Handhabungsgerät, insbesondere einem Roboter und den dazugehörigen Greifern.

Die Verbindung von Handhabungsgeräten und deren dazugehörigen Greifern wird in vielen Fällen zur Vermeidung von Kollisionen die durch Bedienungsfehler oder Störungen auftreten können, unter Zwischenschaltung einer Sicherheitskupplung ausgeführt. Dies ist in der Regel ein Sicherheitsflansch oder ein ähnlich konstruierter Kollisionsschutz. Die Sicherheitskupplung hat die Funktion, bei Auftreten einer Überlast durch eine Kraft oder durch ein Drehmoment den Kraftschluß zwischen Handhabungsgerät und Greifer aufzuheben, d.h. Auszulösen, bzw. zu Öffnen. Das Öffnen der Sicherheitskupplung wird meist sensorisch erfasst und das entstehende Signal wird dazu benutzt, über ein Notaus den Roboter im Gefahrenfall stillzusitzen. Auf diese Weise können Fehlbedienungen oder Störungen am Roboter und an dessen Steuerung nicht zu Schäden an der Pheripherie des Gerätes oder zu Gefahren für den Menschen werden.

Die bekannten bisher eingesetzten Sicherheitskupplungen sind mechanische Konstruktionen mit vorgespannten Federn, die Führungsteile beispielsweise an Pfannen oder an Prismen andrücken. Damit ist die Möglichkeit gegeben, daß die Verbindung zwischen Roboter und Greifer bei Überschreiten einer Überlast geöffnet wird. Derartige Konstruktionen haben jedoch einige Nachteile Durch die aufwendige Mechanik müssen hier relativ große zusätzliche Massen an dem Robotersystem, am Greifer, vorgesehen werden, was zusätzliches Bauvolumen erfordert und somit der Abstand zwischen der letzten Roboterachse und dem Greifer nicht opitmal minimiert werden kann. Dies hat negative Einflüsse auf die Positioniergenauigkeit, auf die Ausführung mechanischer Führungsteile und auf das Verhalten des gesamten Systemes.

Eine Sicherheitskupplung, bei der zwei Flanschen bezogen auf eine gemeinsame zentrale Achse hintereinander angeordnet, mittels konischer Führungskörper entsprechend ausgerichtet sind und über Permanentmagnete gegenseitig gehalten werden, sind aus der britischen Patentanmeldung GB-A-2 071 608 bekannt. Dabei sind die aktiven Flächen der Permanentmagnete senkrecht zur zentralen Achse ausgerichtet.

Der Erfindung liegt die Aufgabe zugrunde, eine Sicherheitskupplung für die Handhabungstechnik zu liefern, die bei Überlast durch am Greifer auftretende Kräfte oder Drehmomente in allen drei Raumrichtungen auslöst, den Abstand zwischen Greifer und Roboter so klein wie möglich gestaltet, den freien Auslauf nach Auslösen der Sicherheitskupplung so groß wie möglich gestaltet und deren Masse im Verhältnis zu bisherigen Lösungen wesentlich reduziert ist.

Die Lösung dieser Aufgabe wird durch den kennzeichnenden Teil des Anspruches 1 wiedergegeben.

Der Erfindung liegt die Erkenntis zugrunde, daß die gewünschten Vorteile durch den Einsatz von Permanentmagneten mit einer bestimmten Anordnung innerhalb der Sicherheitskupplung erzielbar sind. Der prinzipielle Aufbau der Sicherheitskupplung sieht vor, daß auf einer zentralen Achse, die als gedachte Linie zwischen der Verbindung von Roboter und Greifer angesehen werden kann, zwei Flanschen mit einem dazwischenliegenden Zwischenring angeordnet sind, diese Anordnung der drei Bauteile nahezu konzentrisch auf der zentralen Achse sitzt und die in einer bestimmten Weise angeordneten Permanentmagnete jeweils zwischen dem einen Flansch und dem Zwischenring oder dem anderen Flansch und dem Zwischenring gleichmäßig verteilt sind. Die Permanentmagnete sind einseitig mit einem Bauteil verbunden und bewirken zusammen mit jeweils auf dem gegenüberliegenden Bauteil befestigten, ebenfalls planparallelen Kontaktflächen aus magnetischem Werkstoff den für die Arretierung der Sicherheitskupplung nötigen Kraftschluß. Die Ausrichtung der Permanentmagnete und der zugehörigen ebenen Kontaktflächen wird so vorgenommen, daß bei beispielsweise ringförmiger Verteilung der Permanentmagnete auf den Flanschen und/oder dem Zwischenring in der Abwicklung der Zylinderfläche, in der sich die Permanentmagnete befinden, die Oberflächen der Permanentmagnete in einem spitzen Winkel zur Waagerechten angeordnet sind. Es besteht die Möglichkeit, einzelne Permanentmagnete waagerecht anzuordnen, so daß sie lediglich auf Zug bzw. Schub zwischen Roboter und Greifer wirken, die erfindungsgemäße Anordnung sieht jedoch einen spitzen Winkel vor, dessen genaue Bestimmung abhängig ist von der Festlegung der Auslösekräfte und Momente.

Die Möglichkeit, daß eine erfindungsgemäße Sicherheitskupplung in alle drei Raumrichtungen durch Kräfte oder Drehmomente auslösen kann, ist auf die beschriebene spitzwinklige Anordnung der Permanentmagnete zurückzuführen. Dadurch, daß beispielsweise die Hälfte der Magnete zwischen dem einen Flansch und dem Zwischenring angebracht sind und die andere Hälfte zwischen dem anderen Flansch und dem Zwischenring angebracht sind, kann die Sicherheitskupplung bei Auftreten einer Überlast in beiden Richtungen auf der zentralen Achse auslösen, wobei eben genau die Hälfte der Permanentmagnete von deren zugehörigen ebenen Kontaktflächen getrennt wird. Der Zwischenring bleibt über die andere Hälfte der Permanentmagnete am entsprechend anderen Flansch gefestigt. Eine Überlast durch ein Drehmoment führt zur Auslösung der Sicherheitskupplung, indem die spitzwinklige Anordnung der Permanentmagnete, wiederum betrachtet in der Abwicklung, ein Trennen zwischen den ebenen Kontaktflächen und den Oberflächen der Permanentmagnete durch ein seitliches Abschieben, entsprechend einer Abscherbewegung, ermöglicht. Durch die Wahl der Ausrichtung der Oberflächen der Permanentmagnete, deren Grenzlagen die waagerechte oder die senkrechte Ausrichtung sein können, läßt sich die Kombination zwischen Auslöse-Drehmoment und Auslöse-Kraft stufenlos variieren. Eine geringfügige schiefwinklige Ausrichtung der Flächennormalen eines oder mehrerer Permanentmagnete bezogen auf die gemeinsame zentrale Achse führt nicht zu Nachteilen in der Funktion.

Weitere Ausgestaltung der Erfindung können den Ansprüchen 2 bis 7 entnommen werden.

Hierbei ist vorgesehen, daß die Anordnung der Permanentmagnete, sowie deren zugehörige parallele Kontaktflächen paarweise geschieht, um eine über die gesamte Sicherheitskupplung gleichmäßige Verteilung zu erreichen, die zudem eine optimale Konstruktion ermöglicht. Der Aufbau der paarweise angeordneten Permanentmagnete kann zur weiteren Symmetrierung des gesamten Gebildes zweckmäßigerweise durch ein senkrechtes Prisma verwirklicht werden, dessen Grundfläche ein gleichschenkliges Dreieck bildet. Die Lage des Prismas ist in der Abwicklung gesehen so zu verstehen, daß eine Grundfläche des Prismas in der Frontalansicht sichtbar ist und das Kennzeichnen des senkrechten Prismas dadurch gegeben ist, daß die Schnittkante der Seitenflächen des Prismas, wobei die Seitenflächen gleichbedeutend sind mit den Oberflächen der Permanentmagnete bzw. der zugehörigen planparallelen Kontaktflächen, senkrecht zur Zeichenebene liegt.

Eine besonders zweckmäßige Ausgestaltung der Erfindung sieht vor, daß die Permanentmagnete sämtlichst auf dem Zwischenring befestigt sind. Die zugehörigen planparallelen Kontaktflächen, die an die Permanentmagnete eingreifen, sind entsprechend auf den Flanschen angeordnet.

Durch den Einsatz eines Fangbandes zwischen den beiden Flanschen wird verhindert, daß beim Auslösen der Sicherheitskupplung Teile der Kupplung, sowie der Greifer des Handhabungsgerätes oder des Roboters herunterfallen können.

Eine Überwachung der Sicherheitskupplung wird in besonders vorteilhafter Weise durch den Einsatz eines Drucksensors ermöglicht, der auf Druckschwankungen innerhalb eines Gasdrucksystemes anspricht, das über Bohrungen innerhalb der Permanentmagnete mit der Sicherheitskupplung verbunden ist. Die Druckschwankungen treten in dem Moment auf, in dem die Arretierung der Sicherheitskupplung gelöst wird.

Ein vorteilhaftes Herstellungsverfahren für eine derartige Sicherheitskupplung sieht vor, daß zur Erübrigung von präzisen Vorfertigungsschritten die Sicherheitskupplung zum Erlangen von sehr engen Toleranzen innerhalb einer Lehre, durch die die Sicherheitskupplung zentriert wird, durch Aufkleben mit Permanentmagneten bestückt wird. Hier ist eine Klebung von besonderem Vorteil, da bestehende Ungenauigkeiten der Werkstücke durch verschieden ausformbare und entsprechend anpassungsfähige Kleberschichtstärken ausgeglichen werden. Enge Toleranzwerte in der Vorfertigung sind nicht nötig.

Im folgenden wird anhand von schematischen Figuren ein Ausführungsbeispiel wiedergegeben.

Fig. 1 zeigt eine Abwicklung einer Sicherheitskupplung,

Fig. 2 zeigt die Draufsicht auf eine erfindungsgemäße Sicherheitskupplung,

Fig. 3 zeigt einen Schnitt durch die Sicherheitskupplung in zwei verschiedenen Ebenen, wobei einmal die Verbindung zwischen Flansch 4 und Zwischenring 7 und zum anderen die Verbindung zwischen Flansch 2 und Zwischenring 7 zu sehen ist.

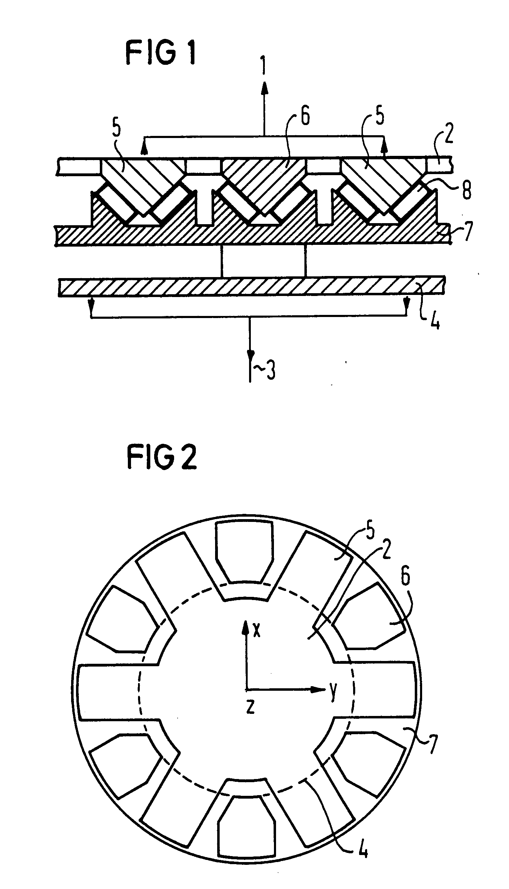

In der Fig. 1 ist eine Abwicklung der Sicherheitskupplung gezeigt, wobei die Permanentmagnete 8 sichtbar sind und der Flansch 4, sowie der Zwischenring 7 im Schnitt gezeichnet sind. Die zwei nach unten gerichteten Seitenflächen der Prismen sind die erwähnten planparallelen Kontaktflächen. Die Abwicklung liegt in der Ebene, in der sich auch die Permanentmagnete befinden, die hier jedoch nicht im Schnitt dargestellt sind. Die Wahl der Schraffur verdeutlicht die Zusammengehörigkeit der entsprechenden Teile. So ist der Flansch 4 mechanisch verbunden mit dem Prisma 6. Der Zwischenring 7 ist eigenständig. Die Prismen 5 sind mechanisch verbunden über den Flansch 2. Der Flansch 2 wird mechanisch verbunden mit dem Handhabungsgerät 1 und der Flansch 4 wird mechanisch verbunden mit dem Greifer 3. In dieser Abwicklung ist sichtbar, daß die Sicherheitskupplung ein Trennen ermöglicht, wenn zwischen Handhabungsgerät 1 und Greifer 3 eine bestimmte Druckkraft Pz überschritten wird. Diese Trennung geschieht am Prisma 6, daß sich von seinen zugehörigen Permanentmagneten 8 löst. Tritt eine entsprechend gerichtete Zugkraft $P_z$ auf, so lösen sich die Prismen 5 von den entsprechend zugehörigen Permanentmagneten 8. Der Zwischenring 7 bleibt im ersten Fall an den Prismen 5 haften und im zweiten Fall an dem Prisma 6. Seitlich auf den Greifer 3 wirkende Kräfte $P_{xy}$ oder Drehmomente M führen über den gleichen Mechanismus zu einem Auslösen der Sicherheitskupplung, wobei zusätzlich Abscher- oder Abrutschbewegungen der Prismen 5 oder 6 auf den zugehörigen Permanentmagneten 8 auftreten. Hierbei ist zu erwähnen, daß durch beispielsweise sehr flach ausgerichteten, also fast waagerecht liegenden Permanentmagneten hohe Schub- oder Zugkräfte $P_z$ übertragbar sind und relativ kleine Drehmomente M. Sind die Permanentmagnete fast senkrecht ausgerichtet, d.h. ihre Flächennormale liegt fast waagrecht, so können mit dieser Anordnung hohe Drehmomente M übertragen werden und relativ kleine Kräfte $P_z$. Da sich diese beiden beschriebenen Auswahlmöglichkeiten gegenseitig bedingen, ist es denkbar, daß einzelne Permanentmagnete 8, die gleichmäßig über den Umfang verteilt sind, auch mit ihren dazugehörigen plan parallelen Kontaktflächen waagerecht angeordnet sind, um z.B. die Auslösekräfte $P_z$ oder auch $P_{xy}$ zu erhöhen.

Die Materialien, aus denen eine erfindungsgemäße Sicherheitskupplung gefertigt wird sind beispielsweise für die Flanschen 2 und 4 Leichtmetalle, um Gewichtsersparnisse zu erzielen, was auch für den Zwischenring 7 gilt. Die Permanentmagnete sind aus üblichem Material gefertigt und die Prismen 5, 6 sind notwendigerweise aus magnetischem Material hergestellt. Hierbei ist in der Regel eine mechanische Verbindung zwischen Prisma 5, 6 und Flansch 2, 4 nötig.

In der Fig. 2 ist mit den eingezeichneten Koordinatenrichtungen X, Y, Z eine Sicherheitskupplung in der Draufsicht gezeigt. Der in diesem Fall unter der Zeichenebene befindliche Greifer 3 ist mechanisch verbunden mit dem Flansch 4, an dem die Prismen 6 befestigt sind. Es ist deutlich die zweckmäßige radialsymmetrische Verteilung der Prismen 5 und 6 zu sehen, die jeweils auf dem äußeren Rand der Sicherheitskupplung angeordnet sind. Das Prisma 5 ist mechanisch verbunden mit dem Flansch 2, der wiederum mit dem Handhabungsgerät 1 verbunden ist. Der Zwischenring 7 ist zwischen den beiden Flanschen sichtbar.

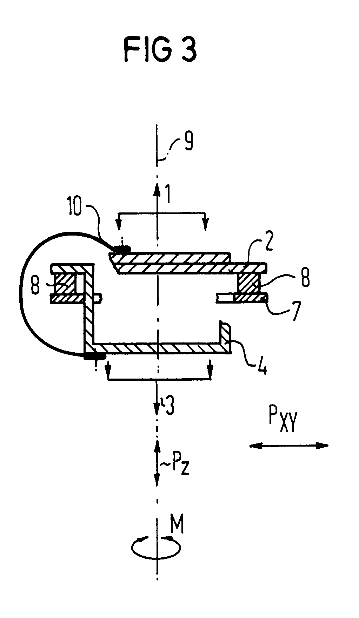

In der Fig. 3 ist die zentrale Achse 9 angedeutet, auf der die Flansche 2, 4 hintereinander mit dem zwischenliegenden Zwischenring 7 arretiert sind. Der Flansch 2 ist wiederum in Richtung des Handhabungsgerätes 1 orientiert und der Flansch 4 in Richtung des Greifers 3. Das Fangband 10 sorgt für die Verbindung zwischen Flansch 2 und 4, damit nach einem Auslösen der Sicherheitskupplung der Flansch 4 mit dem Greifer 3 nicht beschädigt wird. Die Arretierung der Sicherheitskupplung erfolgt über die Permanentmagnete 8, die hier im Schnitt angedeutet sind, wobei jedoch durch die gewinkelte Anordnung von Permanentmagnet 8 und Prisma 5 und 6 eine Schnittfläche- bzw. Kante durch ein Prisma mitberücksichtigt werden müßte, was jedoch hier nicht eingezeichnet ist. Man erkennt deutlich, daß der Flansch 4 innerhalb des Zwischenringes nach oben durch den Zwischenring durchgeführt wird und dort, also oberhalb des Zwischenringes 7, die Arretierung zwischen Flansch 4 und Zwischenring 7 mittels der Permanentmagnete 8 geschieht. Der Flansch 2 wird von oben über die Permanentmagnete 8 direkt auf den Zwischenring 7 aufgesetzt. Die bisher beschriebenen Auslösekräfte $P_z$, $P_{xy}$, sowie das Drehmoment M sind in der Fig. 3 angedeutet.

Die erfindungsgemäße Ausführung einer Sicherheitskupplung hat die besonderen Vorzüge, in allen drei Raumrichtungen auslösen zu können. Die Konstruktion ist so ausführbar, daß der Abstand zwischen Greifer 3 und Handhabungsgerät 1 sehr klein, beispielsweise 30 mm stark ausgelegt werden kann. Weiterhin ist der für die Schutzfunktion wichtige freie Auslauf nach Auftreten einer Überlast größer, als bei bisherigen Lösungen. Die erfindungsgemäße Sicherheitskupplung weist nach einer Überlastung, d.h. im Falle des Auslösens, einen sofortigen und steilen Kraftabfall auf. Sie hat keinerlei Spiel durch mechanische Führungselemente und weist vor dem Auslösen die volle Steifigkeit auf. Durch die winkelige Anordnung der Permanentmagnete ist nach dem Auslösen der Sicherheitskupplung eine hohe Wiederholgenauigkeit beim erneuten Arretieren der Sicherheitskupplung gewährleistet. Eine dem Ausführungsbeispiel entsprechende Sicherheitskupplung ist mit einem Gewicht von ca. 550 g gegenüber bisherigen Lösungen auf etwa ein Drittel im Gewicht reduziert worden.

Die Herstellung einer erfindungsgemäßen Sicherheitskupplung geschieht in einfacher Weise durch einseitiges Aufkleben der Permanentmagnete 8 auf den Zwischenring 7 und anschließendes Einspannen der Sicherheitskupplung in eine Lehre, wobei diese die Anordnung zentriert. Ungenauigkeiten werden durch den Klebstoff ausgeglichen.

**Patentansprüche**

1. Sicherheitskupplung für die Handhabungstechnik, insbesondere für die Verbindung zwischen Roboter und Greifer, bestehend aus
   - zwei Flanschen (2, 4) und mindestens einem dazwischenliegenden Zwischenring (7), wobei
   - die zwei Flanschen (2, 4) bezogen auf eine gemeinsame zentrale Achse (9) hintereinander mit dem/den Zwischenring/en (7) mittels Permanentmagneten (8) mit ebenen Kontaktflächen und mittels entsprechender planparalleler Flächen auf dem/den Zwischenring/en (7) oder auf einem der Flansche (2, 4) relativ zueinander arretierbar sind, wobei
- die überwiegende Mehrheit der Permanentmagnete (8) mit deren Flächennormalen auf der ebenen Kontaktfläche nicht parallel zur gemeinsamen Achse (9) ausgerichtet ist und wobei
- die Anzahl der Permanentmagnete (8) der Anzahl der zugehörigen planparallelen Flächen entspricht.

2. Sicherheitskupplung nach Anspruch 1,
**dadurch gekennzeichnet,**
daß die Permanentmagnete (8), sowie die zugehörigen planparallelen Flächen auf den Flanschen (2;4) bzw. auf dem Zwischenring (7) paarweise angeordnet sind.

3. Sicherheitskupplung nach einem der vorhergehenden Ansprüche,
**dadurch gekennzeichnet,**
daß die Permanentmagnete (8) und die zugehörigen planparallelen Flächen ringförmig und gleichmäßig auf den Flanschen (2;4) und dem Zwischenring (7) verteilt sind.

4. Sicherheitskupplung nach Anspruch 2 oder 3,
**dadurch gekennzeichnet,**
daß die gegenseitige Anordnung zweier zu einem Paar zugehörigen Permanentmagnete (8), sowie deren zugehörige planparallele Flächen den Aufbau eines senkrechten dreiseitigen Prismas aufweist.

5. Sicherheitskupplung nach einem der vorhergehenden Ansprüche,
**dadurch gekennzeichnet,**
daß die Permanentmagnete (8) ausschließlich auf dem Zwischenring (7) befestigt sind und die zugehörigen planparallelen Flächen ausschließlich auf den Flanschen (2;4) angeordnet sind.

6. Sicherheitskupplung nach einem der vorhergehenden Ansprüche,
**daurch gekennzeichnet,**
daß der Flansch (2) mit dem Flansch (4) über ein Fangband verbunden ist.

7. Sicherheitskupplung nach einem der vorhergehenden Ansprüche,
**dadurch gekennzeichnet,**
daß die Permanentmagnete (8) Bohrungen zur Überwachung der Arretierung mittels eines Drucksensors aufweisen.

8. Verfahren zur Herstellung einer Sicherheitskupplung nach einem der vorhergehenden Ansprüche,
**dadurch gekennzeichnet,**
daß die Sicherheitskupplung durch einseitiges Aufkleben der Permanentmagnete (8) auf Flanschen (2;4) oder Zwischenring (7) und anschließendem Einspannen der gesamten Sicherheitskupplung in eine Lehre, hergestellt wird, wobei die gemeinsame zentrale Achse (9) senkrecht steht und die Sicherheitskupplung durch die Lehre zentriert.

**Claims**

1. Safety clutch for handling materials, in particular for the connection between a robot and a gripper, comprising
- two flanges (2, 4) and at least one intermediate ring (7) between them,
- the two flanges (2, 4) being lockable relative to one another, one behind the other in relation to a common central axis (9), to the intermediate ring/s (7) by means of permanent magnets (8) having flat contact faces and by means of corresponding plane-parallel faces on the intermediate ring/s (7) or on one of the flanges (2, 4),
- The overwhelming majority of the permanent magnets (8) not being aligned parallel to the common axis (9) with their surface normals on the flat contact face and
- the number of permanent magnets (8) corresponds to the number of associated plane-parallel faces.

2. Safety clutch according to Claim 1, characterised in that the permanent magnets (8) and the associated plane-parallel faces on the flanges (2; 4) and on the intermediate ring (7) are arranged in pairs.

3. Safety clutch according to one of the preceding claims, characterised in that the permanent magnets (8) and the associated plane-parallel faces are distributed uniformly in a ring on the flanges (2; 4) and the intermediate ring (7).

4. Safety clutch according to Claim 2 or 3, characterised in that the relative arrangement of two permanent magnets (8) forming a pair and of their associated plane-parallel faces has the structure of a perpendicular three-sided prism.

5. Safety clutch according to one of the preceding claims, characterised in that the permanent magnets (8) are fixed exclusively on the intermediate ring (7) and the associated plane-parallel faces are arranged exclusively on the flanges (2; 4).

6. Safety clutch according to one of the preceding claims, characterised in that the flange (2) is connected to the flange (4) via a retention strap.

7. Safety clutch according to one of the preceding claims, characterised in that the permanent magnets (8) have holes so that locking can be monitored by means of a pressure sensor.

8. Method for the production of a safety clutch according to one of the preceding claims, characterised in that the safety clutch is produced by bonding one side of the permanent magnets (8) onto the flanges (2; 4) or the intermediate ring (7) and then clamping the entire safety clutch in a jig, the common central axis (9) being perpendicular and the safety clutch being centred by the jig.

**Revendications**

1. Accouplement de sécurité pour la technique de manipulation, notamment pour le raccordement entre des robots et des dispositifs de préhension, constitué par
   - deux brides (2,4) et au moins un anneau intercalaire (7), et dans lequel
   - les deux brides (2,4) peuvent être bloquées l'une par rapport à l'autre, l'une derrière l'autre par rapport à un axe central commun (9), avec la/les bagues intercalaires (7) au moyen d'aimants permanents (8) possédant des surfaces de contact planes et au moyen de surfaces planes et parallèles correspondantes situées sur la/les bagues intercalaires (7) ou sur l'une des brides (2,4),
   - les normales à la surface de contact plane de la majeure partie des aimants permanents (8) ne sont pas alignées parallèlement à l'axe commun (9), et
   - le nombre des aimants permanents (8) correspond au nombre de surfaces planes et parallèles associées.

2. Accouplement de sécurité suivant la revendication 1, caractérisé par le fait que les aimants permanents (8) ainsi que les surfaces planes et parallèles associées sont disposées par couples sur les brides (2;4) ou sur l'anneau intercalaire (7).

3. Accouplement de sécurité suivant l'une des revendications précédentes, caractérisé par le fait que les aimants permanents (8) et les surfaces planes et parallèles associées sont répartis selon une disposition annulaire et de façon uniforme sur les brides (2;4) et sur l'anneau intercalaire (7).

4. Accouplement de sécurité suivant la revendication 2 ou 3, caractérisé par le fait que la disposition réciproque de deux aimants permanents (8) associés à un couple ainsi que de leurs surfaces planes et parallèles associées présentent l'agencement d'un prisme triangulaire droit.

5. Accouplement de sécurité suivant l'une des revendications précédentes, caractérisé par le fait que les aimants permanents (8) sont fixés exclusivement sur l'anneau intercalaire (7) et que les surfaces planes et parallèles associées sont disposées exclusivement sur les brides (2;4).

6. Accouplement de sécurité suivant l'une des revendications précédentes, caractérisé par le fait que la bride (2) est raccordée à la bride (4) par l'intermédiaire d'une bande de retenue.

7. Accouplement de sécurité suivant l'une des revendications précédentes, caractérisé par le fait que les aimants permanents (8) possèdent des perçages servant à contrôler le blocage au moyen d'un capteur de pression.

8. Procédé pour fabriquer un accouplement de sécurité suivant l'une des revendications précédentes, caractérisé par le fait que l'accouplement de sécurité est réalisé au moyen d'un collage unilatéral des aimants permanents (8) sur des brides (2;4) ou sur un anneau intercalaire (7) et d'un serrage ultérieur de l'ensemble de l'accouplement de sécurité dans un gabarit, l'axe central commun (9) étant vertical et l'accouplement de sécurité étant centré au moyen du gabarit.

## FIG 1

## FIG 2

# FIG 3